# EUROPEAN PATENT SPECIFICATION

(11) **EP 4 053 176 B1**
(45) Date of publication and mention of the grant of the patent: **08.10.2025**
(21) Application number: 20882464.9
(22) Date of filing: 27.10.2020
(51) Int. Cl.: C08F 214/26, C08L 27/18, C08K 5/57, C08K 5/00, C08K 5/14

(54) **FLUORINATED COPOLYMER, FLUORINATED COPOLYMER COMPOSITION, AND CROSSLINKED RUBBER ARTICLE**
FLUORIERTES COPOLYMER, ZUSAMMENSETZUNG AUS EINEM FLUORIERTEN COPOLYMER UND VERNETZTER KAUTSCHUKARTIKEL
COPOLYMÈRE FLUORÉ, COMPOSITION DE COPOLYMÈRE FLUORÉ ET ARTICLE EN CAOUTCHOUC RÉTICULÉ

(30) Priority: 30.10.2019 JP 2019197115
(43) Date of publication of application: 07.09.2022
(73) Proprietor: AGC INC., Chiyoda-ku, Tokyo 1008405 (JP)
(72) Inventor: HATTORI, Yukiko, Tokyo 100-8405 (JP); KAWAI, Tsuyoshi, Tokyo 100-8405 (JP); YAMADA, Takeshi, Tokyo 100-8405 (JP); AKATSU, Kuniaki, Tokyo 100-8405 (JP)
(74) Representative: Müller-Boré & Partner Patentanwälte PartG mbB
(86) International application number: PCT/JP2020/040280
(87) International publication number: WO 2021/085423

(56) References cited:
- EP-A1- 3 650 476
- WO-A1-2019/009248
- WO-A1-2020/114972
- JP-A- 2008 031 195
- JP-A- 2009 529 070
- JP-A- 2019 500 469
- JP-A- H11 510 495

## Description

### TECHNICAL FIELD

The present invention relates to a fluorinated copolymer, a fluorinated copolymer composition, and a crosslinked rubber article.

### BACKGROUND ART

A crosslinked rubber article obtainable by crosslinking a fluorinated copolymer is excellent in heat resistance, chemical resistance, oil resistance, weather resistance, etc. and thus is used in various environments.

As a fluorinated copolymer to be used to obtain such a crosslinked rubber article, Patent Document 1 discloses a fluorinated copolymer having units based on tetrafluoroethylene, units based on a perfluoro(alkyl vinyl ether) and units based on a monomer having a nitrile group (cyano group). Patent Document 2 discloses a fluorinated elastic copolymer, a fluorinated elastic copolymer composition, a crosslinked rubber article, and a method for producing a fluorinated elastic copolymer. Specifically, Patent Document 2 discloses a fluorinated elastic copolymer comprising units based on tetrafluoroethylene, units based on a compound represented by the following formula (i), units based on a compound represented by the following formula (ii), and units based on a fluorinated monomer having at least two polymerizable unsaturated bonds:

CF₂=CFOR^{f1} (i)

wherein R^{f1} is a C₁₋₁₀ perfluoroalkyl group,

   CF₂=CF(OCF₂CF₂)ₙ-(OCF₂)ₘ-OR^{f2} (2)
wherein R^{f2} is a C₁₋₄ perfluoroalkyl group, n is an integer of from 0 to 3, m is an integer of from 0 to 4, and n + m is an integer of from 1 to 7.

### PRIOR ART DOCUMENT

### PATENT DOCUMENT

Patent Document 1: JP-A-H6-263952
Patent Document 2: EP 3 650 476 A1 & WO 2019/009248 A1

### DISCLOSURE OF INVENTION

### TECHNICAL PROBLEM

A crosslinked rubber article is produced, for example, by supplying a fluorinated copolymer to a mold and heating and molding it. When the present inventors have produced a crosslinked rubber article by using the fluorinated copolymer disclosed in Patent Document 1, they have found that there is a room for improvement in release properties of the crosslinked rubber article from the mold.

The present invention has been made in consideration of the above problem, and its object is to provide a fluorinated copolymer and a fluorinated copolymer composition, whereby it is possible to produce a crosslinked rubber article excellent in mold release properties, as well as a crosslinked rubber article by using the same.

### SOLUTION TO PROBLEM

As a result of diligent study of the above problem, the present inventors have found that by using a fluorinated copolymer having units based on tetrafluoroethylene, units based on a perfluoro(alkyl vinyl ether), units based on a monomer having a fluorine atom and at least two polymerizable unsaturated bonds, and units based on a monomer having a nitrile group and a fluorine atom, it is possible to produce a crosslinked rubber article excellent in mold release properties, and thus have arrived at the present invention.

That is, the present inventors have found it possible to solve the above problem by the construction as defined in the appended claims.

### ADVANTAGEOUS EFFECTS OF INVENTION

According to the present invention, it is possible to provide a fluorinated copolymer and a fluorinated copolymer composition, whereby it is possible to produce a crosslinked rubber article excellent in mold release properties, as well as a crosslinked rubber article using the same.

### PREFERRED EMBODIMENTS

The meanings of terms in the present invention are as follows.

The range of numerical values represented by using " to " means a range that includes the numerical values listed before and after " to " as the lower and upper limit values.

A "unit" is a generic term for an atomic group derived from one molecule of a monomer and formed directly by polymerization of the monomer, and an atomic group obtainable by chemical conversion of a portion of the above atomic group. "Units based on a monomer" may hereinafter simply be referred to also as "units".

The term "rubber" means rubber showing properties defined by JIS K6200 (2008) and is distinguished from "resin".

### [Fluorinated copolymer]

The fluorinated copolymer of the present invention has units based on tetrafluoroethylene (hereinafter referred to also as "TFE"), units based on a perfluoro(alkyl vinyl ether) (hereinafter referred to also as "PAVE"), units based on a monomer having a fluorine atom and at least two polymerizable unsaturated bonds (hereinafter referred to also as "DVE"), and units based on a monomer having a nitrile group and a fluorine atom (hereinafter referred to also as "R_{C N}").

The crosslinked rubber article obtained by using the fluorinated copolymer of the present invention is excellent in mold release properties. The details of the reason for this have not been clarified, but it is assumed to be due to the following reason.

The fluorinated copolymer of the present invention has DVE units and R_{CN} units. It is considered that the crosslinked rubber article thereby becomes rigid, and when the crosslinked rubber article is released from the mold, the crosslinked rubber is less likely to follow the mold and is easily released. In particular, the fluorinated copolymer of the present invention is presumed to have a more uniform distribution of crosslinkable groups throughout the polymer as compared to the fluorinated copolymer containing DVE units or R_{CN} units alone. Therefore, it is thought that the mold release properties have been improved by the improvement of hardness in the microscopic part of the crosslinked rubber article, where no difference can be found from the physical properties such as general rubber hardness.

PAVE units are units based on a perfluoro(alkyl vinyl ether).

PAVE is preferably a monomer represented by the following formula (1), because of its excellent polymerization reactivity and rubber properties.

CF₂=CF-O-R^{f1} (1)

In the formula (1), R^{f1} represents a C₁₋₁₀ perfluoroalkyl group. The number of carbon atoms in R^{f1} is preferably from 1 to 8, more preferably from 1 to 6, further preferably from 1 to 5, particularly preferably from 1 to 3, from the viewpoint of better polymerization reactivity.

The perfluoroalkyl group may be linear or branched-chain.

As specific examples of PAVE, perfluoro(methyl vinyl ether) (hereinafter referred to also as "PMVE"), perfluoro(ethyl vinyl ether) (hereinafter referred to also as "PEVE"), and perfluoro(propyl vinyl ether) (hereinafter referred to also as "PPVE"), may be mentioned, and among them, PMVE and PPVE are preferred.

DVE units are units based on a monomer having a fluorine atom and at least two polymerizable unsaturated bonds.

The number of polymerizable unsaturated bonds in DVE is from 2 to 6, preferably 2 or 3, particularly preferably 2, as the polymerization reactivity will be better.

DVE is a monomer represented by the following formula (2) from such a viewpoint that the mold release properties of a crosslinked rubber article will be better.

(CR²¹R²²=CR²³)ₐ₂R²⁴ (2)

In the formula (2), R²¹, R²² and R²³ each independently represent a hydrogen atom, a fluorine atom, a methyl group or a trifluoromethyl group, and a2 represents an integer of from 2 to 6, and R²⁴ is an a2-valent C₁₋₁₀ perfluorohydrocarbon group having etheric oxygen atoms at the terminals of the perfluorohydrocarbon group. The plurality of R²¹, the plurality of R²² and the plurality of R²³ may, respectively, be the same or different from one another, and particularly preferably are the same to one another.

a2 is preferably 2 or 3, particularly preferably 2.

From such a viewpoint that the polymerization reactivity of DVE will be better, R²¹, R²² and R²³ are preferably fluorine atoms or hydrogen atoms; more preferably, all of R²¹, R²² and R²³ are fluorine atoms or all of them are hydrogen atoms; and from such a viewpoint that the mold release properties of a crosslinked rubber article will be better, particularly preferably all of R²¹, R²² and R²³ are fluorine atoms.

R²⁴ may be linear, branched-chain, or cyclic; linear or branched-chain is preferred, and linear is particularly preferred. The number of carbon atoms in R²⁴ is preferably from 2 to 8, more preferably from 3 to 7, further preferably from 3 to 6, particularly preferably from 3 to 5.

R²⁴ has etheric oxygen atoms because of the better crosslinking reactivity and rubber properties.

The number of etheric oxygen atoms in R²⁴ is 2. The etheric oxygen atoms in R²⁴ are present at the terminal of R²⁴.

Among the monomers represented by the formula (2), as specific examples of the preferred monomers, a monomer represented by the following formula (3) may be mentioned.

(CF₂ =CF)₂ R^{3 1} (3)

In the formula (3), R³¹ is a C₁₋₁₀ divalent perfluorohydrocarbon group having etheric oxygen atoms at the terminals of the perfluorohydrocarbon group.

As specific examples of the monomer represented by the formula (3), CF₂ =CFO(CF₂)₂ OCF=CF₂ , CF₂ =CFO(CF₂)₃ OCF=CF₂ , CF₂ =CFO(CF₂)₄ OCF=CF₂ , CF₂ =CFO(CF₂)₆ OCF=CF₂ , and CF₂ =CFO(CF₂)₈ OCF=CF₂ may be mentioned.

Among the monomers represented by the formula (3), as specific examples of more suitable monomers, CF₂ =CFO(CF₂)₃ OCF=CF₂ (hereinafter referred to also as "C3DVE"), CF₂ =CFO(CF₂)₄ OCF=CF₂ (hereinafter referred to also as "C4DVE" or "PBDVE") may be mentioned.

When DVE is copolymerized, a portion of the polymerizable double bond at the terminal of DVE reacts during polymerization to produce a fluorinated copolymer having a branched chain.

R_{CN} units are units based on a monomer having a nitrile group and a fluorine atom. When the fluorinated copolymer has R_{CN} units, the heat resistance of the crosslinked rubber article will be excellent.

From the viewpoint of the polymerization reactivity, R_{CN} preferably has a polymerizable unsaturated bond, particularly preferably has one polymerizable unsaturated bond. Specific examples of the polymerizable unsaturated bond are as described above.

R_{CN} is preferably a monomer represented by the following formula (5) from the viewpoint of better mold release properties and heat resistance of the crosslinked rubber article.

CR⁵¹R⁵²=CR⁵³-R⁵⁴-CN (5)

In the formula (5), R⁵¹, R⁵² and R⁵³ each independently represent a hydrogen atom, a fluorine atom or a methyl group, and R⁵⁴ is a divalent C₁₋₁₀ perfluorohydrocarbon group or a group having an etheric oxygen atom at the terminal or between carbon-carbon atoms of the perfluorohydrocarbon group.

From the viewpoint of better polymerization reactivity of R_{CN}, R⁵¹, R⁵² and R⁵³ are preferably fluorine atoms or hydrogen atoms, more preferably all of R⁵¹, R⁵² and R⁵³ are fluorine atoms or all of them are hydrogen atoms, and from the viewpoint of better mold release properties and heat resistance of the crosslinked rubber article, it is particularly preferred that all of R⁵¹, R⁵² and R⁵³ are fluorine atoms.

R⁵⁴ may be linear, branched-chain, or cyclic, and linear or branched-chain is preferred. The number of carbon atoms in R⁵⁴ is preferably from 2 to 8, more preferably from 3 to 7, further preferably from 3 to 6, particularly preferably from 3 to 5.

R⁵⁴ may or may not have an etheric oxygen atom, but preferably has an etheric oxygen atom from such a viewpoint that the rubber properties will be better.

The number of etheric oxygen atoms in R⁵⁴ is preferably from 1 to 3, particularly preferably 1 or 2.

As specific examples of the monomer represented by the formula (5), CF₂=CFOCF₂CF(CF₃)OCF₂CF₂CN (hereinafter referred to also as "8CNVE"), CF₂=CFO(CF₂)₅CN (hereinafter referred to also as "MV5CN"), CF₂=CFOCF₂CF₂CF₂OCF(CF₃)CN, and CF₂=CFO(CF₂)₃CN, may be mentioned, and from such a viewpoint that the mold release properties and heat resistance of the crosslinked rubber article will be better, 8CNVE and MV5CN are preferred.

The fluorinated copolymer may have units based on monomers other than TFE, PAVE, DVE and R_{CN}. Hereinafter, units based on monomers other than TFE, PAVE, DVE and R_{CN} may sometimes be collectively referred to as "other monomers".

As specific examples of other monomers, units based on a monomer represented by the following formula (6) (hereinafter referred to also as "formula (6) units"), vinylidene fluoride (hereinafter referred to also as "VdF") units, hexafluoropropylene (hereinafter referred to also as "HFP") units, chlorotrifluoroethylene (hereinafter referred to also as "CTFE") units, ethylene units, as well as monomers represented by TFE, PAVE, DVE, R_{CN} and the formula (6), and monomers having halogen atoms other than VdF, HFP and CTFE (hereinafter referred to also as other monomers having halogen atoms) (e.g. bromotrifluoroethylene, and iodotrifluoroethylene), may be mentioned.

The formula (6) is as follows.

CF₂=CF-O-R^{f2} (6)

In the formula (6), R^{f2} represents a C₁₋₈ perfluoroalkyl group containing from 1 to 5 etheric oxygen atoms. The number of carbon atoms in R^{f2} is preferably from 1 to 6, particularly preferably from 1 to 5.

As specific examples of the monomer represented by the formula (6), perfluoro(3,6-dioxa-1-heptene), perfluoro(3,6-dioxa-1-octene) and perfluoro(5-methyl-3,6-dioxa-1-nonene) may be mentioned.

From such a viewpoint that the heat resistance of the crosslinked rubber article will be better, the content of TFE units is preferably from 59 to 80 mol%, more preferably from 63 to 75 mol%, particularly preferably from 66 to 72 mol%, to all units of the fluorinated copolymer.

From such a viewpoint that the elasticity of the crosslinked rubber article will be better, the content of PAVE units is preferably from 19 to 40 mol%, more preferably from 24 to 36 mol%, particularly preferably from 27 to 33 mol%, to all units of the fluorinated copolymer.

From such a viewpoint that the mold release properties of the crosslinked rubber article will be better, the content of DVE units is preferably from 0.01 to 1.0 mol%, more preferably from 0.03 to 0.6 mol%, particularly preferably from 0.05 to 0.4 mol%, to all units of the fluorinated copolymer.

From such a viewpoint that the mold release properties and the heat resistance of the crosslinked rubber article will be better, the content of R_{CN} units is preferably from 0.05 to 5 mol%, more preferably from 0.1 to 3 mol%, particularly preferably from 0.2 to 1.5 mol%, to all units of the fluorinated copolymer.

In a case where the fluorinated copolymer contains other monomer units, from the viewpoint of the heat resistance of the crosslinked rubber article, the content of other monomer units is preferably from 0.01 to 20 mol%, more preferably from 0.5 to 10 mol%, particularly preferably from 1 to 5 mol%, to all units of the fluorinated copolymer.

From such a viewpoint that the mold release properties and the heat resistance of the crosslinked rubber article will be better, it is preferred that, to all units of the fluorinated copolymer, the content of TFE units is from 59 to 80 mol%, the content of PAVE units is from 19 to 40 mol%, the content of DVE units is from 0.01 to 1.0 mol%, and the content of R_{CN} units is from 0.05 to 5 mol%.

The molar ratio (DVE units/R_{CN} units) of the content of DVE units to the content of R_{CN} units is from 0.03 to 2, preferably from 0.1 to 1, particularly preferably from 0.35 to 0.59. When the molar ratio is within the above range, it is possible to satisfy both the mold release properties and the heat resistance of the crosslinked rubber article at a high level.

Further, the DVE units to all units in the fluorinated copolymer are calculated based on the amount of DVE used in the production of the fluorinated copolymer (the amount of DVE used). Here, the "amount of DVE used" is a value obtained by deducting the amount of DVE that was not polymerized, from the amount of DVE added to the polymerization vessel (the amount of DVE charged). DVE that was not polymerized, is considered to be contained in the filtrate after coagulating the latex after polymerization and removing the fluorinated copolymer, as well as in the filtrate remaining after washing the latex, and its amount can be measured by measuring fluoride ions by an ion chromatography measurement device.

Further, TFE units, PAVE units and R_{CN} units to all units in the fluorinated copolymer are calculated by ¹⁹F-nuclear magnetic resonance (NMR) analysis. Specifically, TFE units:PAVE units:R_{CN} units (molar ratio) in the fluorinated copolymer is calculated by ¹⁹F-nuclear magnetic resonance (NMR) analysis. Then, to a value obtained by subtracting the content (mol%) of DVE units from 100 mol%, TFE units:PAVE units:R_{CN} units (molar ratio) in the fluorinated copolymer obtained by ¹⁹F-nuclear magnetic resonance (NMR) analysis, is applied to obtain the contents of the respective units.

The fluorinated copolymer may have an iodine atom. In such a case, it is preferred that it has an iodine atom at the terminal of the fluorinated copolymer (polymer chain).

As the iodine atom, an iodine atom derived from an iodine compound that functions as a chain transfer agent as described later, or an iodine atom in a unit based on a monomer having an iodine atom among other monomers having other halogen atoms such as iodotrifluoroethylene as described above, and an iodine atom derived from an iodine compound that functions as a chain transfer agent, is preferred.

In a case where the fluorinated copolymer has an iodine atom, its content is preferably from 0.01 to 5.0 mass%, more preferably from 0.05 to 2.0 mass%, particularly preferably from 0.05 to 1.0 mass%, to the entire mass of the fluorinated copolymer. When the content of the iodine atom is within the above range, the crosslinking reactivity of the fluorinated copolymer will be improved, and the mechanical properties of the crosslinked rubber article will be excellent.

### <Physical properties>

The storage modulus G' of the fluorinated copolymer is preferably at least 450 kPa, particularly preferably at least 470 kPa. The details of the reason are unknown, but when the storage modulus G' is at least 470 kPa, it is possible to make the compression set of the crosslinked rubber article to be smaller under high temperature conditions.

From the viewpoint of excellent processability, the storage modulus G' of the fluorinated copolymer is preferably at most 650 kPa, more preferably at most 630 kPa, particularly preferably at most 600 kPa.

As one example of a method to obtain a fluorinated copolymer with a storage modulus G' of at least 470 kPa, a method of adjusting the order of additions or the number of additions of the respective monomers during the production of the fluorinated copolymer, may be mentioned.

Here, the storage modulus G' is an index for the average molecular weight, where a high value indicates a large molecular weight, and a low value indicates a small molecular weight.

The storage modulus G' of the fluorinated copolymer in the present invention is a value to be measured in accordance with ASTM D6204, and the detailed measurement conditions are as shown in Examples.

The storage modulus G'₁ and storage modulus G'_{0.1} of the fluorinated copolymer in the present invention are values to be measured in accordance with ASTM D4440, and the detailed measurement conditions are as shown in Examples.

### <Production method for fluorinated copolymer>

As one example of a method for producing the fluorinated copolymer of the present invention, a method of copolymerizing the above-described monomers in the presence of a radical polymerization initiator may be mentioned.

As the radical polymerization initiator, a water-soluble polymerization initiator or a redox polymerization initiator is preferred.

As specific examples of the water-soluble polymerization initiator, a persulfate such as ammonium persulfate, sodium persulfate or potassium persulfate, and an organic polymerization initiator such as disuccinic acid peroxide or azobisisobutylamidine dihydrochloride, may be mentioned. Among them, a persulfate is preferred, and ammonium persulfate is more preferred.

As the redox polymerization initiator, a polymerization initiator having a persulfate and a reducing agent combined, may be mentioned. Among them, a polymerization initiator capable of polymerizing the respective monomers at a polymerization temperature in the range of from 0 to 60°C is preferred. As specific examples of the persulfate constituting a redox polymerization initiator, ammonium persulfate, alkali metal salts of persulfate such as sodium persulfate, potassium persulfate, etc., may be mentioned, and ammonium persulfate is preferred. As specific examples of the reducing agent to be combined with the persulfate, a thiosulfate, a sulfite, a hydrogen sulfite, a pyrosulfite and a hydroxymethanesulfinate, may be mentioned, and a hydroxymethanesulfinate is preferred, and sodium hydroxymethanesulfinate is particularly preferred.

In the method for producing the fluorinated copolymer of the present invention, the above monomers may be copolymerized in the presence of a chain transfer agent along with a radical polymerization initiator.

The chain transfer agent is preferably an iodine compound, and an iodine compound represented by the formula RI₂ is particularly preferred. In the above formula, R represents an alkylene group or a perfluoroalkylene group having 3 or more carbon atoms (preferably, from 3 to 8 carbon atoms).

As specific examples of the iodine compound represented by the formula RI₂, 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane may be mentioned.

As the iodine compound, an iodine compound having a perfluoroalkylene group is preferred, and 1,4-diiodoperfluorobutane is particularly preferred.

When the above monomers are copolymerized in the presence of such an iodine compound, it is possible to introduce an iodine atom into the fluorinated copolymer.

With respect to details on components other than those mentioned above to be used in the production of the fluorinated copolymer and the production method, the methods disclosed in paragraphs [0019] to [0034] of WO2010/082633 may be referred to.

### [Fluorinated copolymer composition]

The fluorinated copolymer composition of the present invention comprises the above-described fluorinated copolymer and at least one of a crosslinking agent and a catalyst. The fluorinated copolymer composition may contain only one or both of the crosslinking agent and the catalyst.

As specific examples of the crosslinking agent, an organic peroxide, a polyol, an amine and a triazine may be mentioned, and an organic peroxide is preferred from such a viewpoint that the productivity, heat resistance and chemical resistance of the crosslinked rubber article will be excellent.

As specific examples of the organic peroxide, a dialkyl peroxide, α,α'-bis(tert-butylperoxy)-p-diisopropylbenzene, α,α'-bis(tert-butylperoxy)-m-diisopropylbenzene, benzoyl peroxide, tert-butylperoxy benzene and 2,5-dimethyl-2,5-di(benzoyl peroxy)hexane, may be mentioned.

As specific examples of the dialkyl peroxide, 1,1-di(tert-butylperoxy)-3,3,5-trimethylcyclohexane, 2,5-dimethylhexane-2,5-dihydroxy peroxide, tert-butyl cumyl peroxide, dicumyl peroxide, 2,5-dimethyl-2,5-di(tert-butylperoxy)hexane, 2,5-dimethyl-2,5-di(tert-butylperoxy)-3-hexyne, tert-butylperoxy maleic acid and tert-butylperoxy isopropyl carbonate may be mentioned.

As the amine, a compound having at least two amino groups (hereinafter referred to also as a "polyamine compound") may be mentioned.

The polyamine compound may be a compound in which hydrogen atoms of a aliphatic hydrocarbon are substituted with amino groups, or a compound in which hydrogen atoms of an aromatic hydrocarbon are substituted with amino groups, but a compound in which hydrogen atoms of an aromatic hydrocarbon are substituted with amino groups is preferred, since the effects of the present invention will be better.

It is preferred that the polyamine compound contains fluorine atoms, whereby the compatibility with the specific fluorinated copolymer will be better, so that it will be possible to obtain a crosslinked rubber article with a smaller compression set under a high temperature.

As specific examples of the polyamine compound, hexamethylenediamine, hexamethylenediamine carbamate, 2,2-bis[4-(4-aminophenoxy)phenyl] propane, 2,2-bis(3-amino-4-hydoxyphenyl) propane, 2,2-bis(3-amino-4-hydroxyphenyl)hexafluoropropane (hereinafter referred to also as "BOAP", another name, bis-aminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic acid dihydrazide, and a compound represented by the formula (XII) in Japanese Patent No. 5833657, may be mentioned. Among them, BOAP is preferred, from such a viewpoint that the compression set will be better.

In a case where the fluorinated copolymer composition contains a crosslinking agent, the content of the crosslinking agent is preferably from 0.3 to 1.0 parts by mass, more preferably from 0.3 to 5 parts by mass, particularly preferably from 0.5 to 3 parts by mass, to 100 parts by mass of the fluorinated copolymer. When the content of the crosslinking agent is within the above range, the crosslinked rubber article will be excellent in balance of strength and elongation.

The catalyst is an organotin compound. An organotin compound is used from such a viewpoint that the crosslinked rubber article will be better in productivity, heat resistance and chemical resistance.

As specific examples of the organotin compound, tetramethyltin, tetra(n-butyl)tin, and tetraphenyltin may be mentioned.

In a case where the fluorinated copolymer composition contains a catalyst, the content of the catalyst is preferably from 0.3 to 10 parts by mass, more preferably from 0.3 to 5 parts by mass, particularly preferably from 0.5 to 3 parts by mass, to 100 parts by mass of the fluorinated copolymer. When the content of the catalyst is within the above range, the crosslinked rubber article will be excellent in balance of strength and elongation.

### <Other components>

The fluorinated copolymer composition may contain other components other than those listed above to such an extent that the effects of the invention are not impaired. As other components, a crosslinking aid (e.g. triallyl cyanurate, triallyl isocyanurate or trimethallyl isocyanurate), an acid-receiving agent (e.g. a fatty acid ester, a fatty acid metal salt, an oxides of a divalent metal (magnesium oxide, calcium oxide, zinc oxide, lead oxide, etc.)), a filler and reinforcing material (e.g. carbon black, barium sulfate, calcium metasilicate, calcium carbonate, titanium oxide, silicon dioxide, clay, talc), a scorch retardant (e.g. a phenolic hydroxy group-containing compound such as bisphenol A, a quinone such as hydroquinone, an α-methylstyrene dimer such as 2,4-di(3-isopropylphenyl)-4-methyl-1-pentene), a crown ether (e.g. 18-crown-6), and a mold release agent (e.g. sodium stearate), may be mentioned.

Although the fluorinated copolymer composition may contain a mold release agent, the release agent may bleed out from the surface of the crosslinked rubber article obtained by using the composition, thus causing contamination. Therefore, from the viewpoint of suitability for use as a component (e.g. O-ring) of a semiconductor production equipment, it is preferred that the fluorinated copolymer composition does not substantially contain a mold release agent.

Here, "the fluorinated copolymer composition does not substantially contain a mold release agent" means that the content of the mold release agent is at most 0.1 part by mass to 100 parts by mass of the fluorinated copolymer, and at most 0.01 part by mass is preferred, and 0 part by mass is particularly preferred.

In a case where the fluorinated copolymer composition contains other components, the total of contents of other components is preferably more than 0 and at most 30 parts by mass, more preferably from 1 to 25 parts by mass, particularly preferably from 5 to 15 parts by mass, to 100 parts by mass of the fluorinated copolymer.

As the method for preparing a fluorinated copolymer composition, a method of mixing the above-mentioned respective components. The mixing of the respective components may be carried out by using a mixing device for rubber, such as a roll, a kneader, a Banbury mixer or an extruder.

After obtaining a mixture of the above-mentioned respective components, the mixture may be molded. As specific examples of the molding method of the mixture, compression molding, injection molding, extrusion molding, calendar molding, or a method of dissolving the mixture in a solvent and dipping or coating it on a substrate or the like, may be mentioned.

### <Physical properties>

As an index for the crosslinking properties of the fluorinated copolymer composition, M_{H}-M_{L} (hereinafter referred to also as "degree of crosslinking") to be measured by the method in Examples, as described later, is mentioned. The larger the numerical value of the degree of crosslinking, the more the crosslinked structure in the crosslinked rubber.

The degree of crosslinking of the crosslinked rubber is preferably at most 80 dNm, more preferable at most 60 dNm, particularly preferably at most 40 dNm. When the degree of crosslinking of the crosslinked rubber is within the above range, the flexibility of the crosslinked rubber will be excellent.

The degree of crosslinking of the crosslinked rubber is preferably at least 3 dNm, more preferably at least 5 dNm, particularly preferably at least 10 dNm. When the degree of crosslinking of the crosslinked rubber is within the above range, the compression set of the crosslinked rubber will be excellent.

### [Crosslinked rubber article]

The crosslinked rubber article of the present invention is a rubber article having the fluorinated copolymer in the above-described fluorinated copolymer composition crosslinked.

As a method of crosslinking the fluorinated copolymer in the fluorinated copolymer composition, a method for crosslinking by heating the fluorinated copolymer composition is preferred.

As specific examples of the method for crosslinking by heating, heated press crosslinking, steam crosslinking, and hot air crosslinking may be mentioned. From these methods, it may be suitably selected in consideration of the shape or application of the fluorinated copolymer or fluorinated copolymer composition.

The heating conditions are preferably from 100 to 400°C for from 1 second to 24 hours.

The crosslinked rubber made by heating (primary crosslinking) the fluorinated copolymer composition, may further be heated for secondary crosslinking. By conducting the secondary crosslinking, it is possible to stabilize or improve the mechanical properties, compression set and other properties of the crosslinked rubber.

The heating conditions for the secondary crosslinking are preferably from 80 to 350°C for from 30 minutes to 48 hours.

As a crosslinking method other than crosslinking the fluorinated copolymer by heating, a method of crosslinking the fluorinated copolymer by irradiating the fluorinated copolymer composition with radiation, may be mentioned. As specific examples of the radiation to be irradiated, electron beams and ultraviolet rays may be mentioned.

### <Physical properties>

The tensile strength (tensile strength at break) of the crosslinked rubber article is preferably from 1 to 50 MPa, particularly preferably from 10 to 35 MPa, from such a viewpoint that the rubber properties will be excellent.

The 100% modulus (tensile stress at 100% elongation) of the crosslinked rubber article is preferably from 0.2 to 15 MPa, particularly preferably from 0.5 to 9 MPa, from such a viewpoint that the rubber properties will be excellent.

The tensile elongation (elongation rate at break) of the crosslinked rubber article is preferably from 100 to 1,000%, particularly preferably from 120 to 600%, from such a viewpoint that the rubber properties will be excellent.

The tensile strength, 100% modulus, and elongation rate at break of the crosslinked rubber article are values to be measured by the methods in accordance with JIS K6251: 2010 (corresponding international standard ISO 37: 2005).

The hardness (Shore-A) of the crosslinked rubber article is preferably from 65 to 100, more preferably from 68 to 90, particularly preferably from 70 to 85, from such a viewpoint that the rubber properties will be excellent.

The hardness (Shore-A) of the crosslinked rubber article is a value to be measured by using a plate shaped molded product of the crosslinked rubber article (thickness: 1 mm), using a type A durometer in accordance with JIS K6253-1: 2012.

The compression set at 250°C of the crosslinked rubber article is preferably at most 65%, and from the viewpoint that the fluorinated copolymer will be well crosslinked and the shape recovery after pressing of the crosslinked rubber article will be excellent, more preferably at most 60%, further preferably at most 50%, particularly preferably at most 40%.

The lower limit value of the compression set at 250°C of the crosslinked rubber article is preferably 0%, and it is most preferred that the compression set at 250°C of the crosslinked rubber article is 0%.

The compression set at 250°C of the crosslinked rubber articles is a value to be measured in accordance with JIS K6262 by using a plate shaped molded product of the crosslinked rubber article (thickness: 1 mm).

The above-described respective physical properties of the crosslinked rubber article may be adjusted, for example, by the production conditions of the above-described fluorinated copolymer (e.g. the order of additions, number of times of additions, and amounts of additions of the respective monomers), the types and contents of the respective components to be contained in the above-described fluorinated copolymer composition, and the production conditions of the crosslinked rubber article (e.g. crosslinking conditions).

### <Applications>

The crosslinked rubber article is suitable as a material of an O-ring, a sheet, a gasket, an oil seal, a diaphragm or a V-ring, etc. It may also be applied to applications, such as heat-resistant chemical-resistant sealing materials, heat-resistant oil-resistant sealing materials, electric wire coating materials, sealing materials for semiconductor devices, corrosion-resistant rubber paints, sealing materials for urea-resistant greases, etc., rubber paints, adhesive rubbers, hoses, tubes, calendered sheets (rolls), sponges, rubber rolls, members for oil drilling, heat radiation sheets, solution crosslinked materials, rubber sponge, bearing seal (urea resistant grease, etc.), lining (chemical resistant), automotive insulating sheet, insulating sheet for electronic equipment, rubber band for watches, packing for endoscope (amine resistant), bellows hose (processed from calendered sheet), packing/valve for water heater, fender (marine civil engineering, ships), fibers and non-woven fabrics (protective clothing, etc.), sealing materials for substrates, rubber gloves, stators for uniaxial eccentric screw pumps, parts for urea SCR systems, vibration isolators, damping agents, sealants, additives to other materials, and toys.

### EXAMPLES

In the following, the present invention will be described in detail with reference to Examples. Ex. 1 to Ex. 4 and Ex. 6 are Examples of the present invention, Ex. 5 is a Reference Example and Ex. 7 and 8 are Comparative Examples. However, the present invention is not limited to these Examples. Further, the contents of the respective components in the Tables given later, are based on mass, unless otherwise specified.

### [Content of units based on the respective monomers in the fluorinated copolymer]

The content (mol%) of DVE units to all units of the fluorinated copolymer was calculated based on the amount of DVE used in the production of the fluorinated copolymer (amount of DVE used).

Further, the contents (mol%) of TFE units, PAVE units and R_{CN} units to all units of the fluorinated copolymer were calculated based on the ¹⁹F-nuclear magnetic resonance (NMR) analyses.

### <Calculation of the content of DVE units to all units of the fluorinated copolymer>

The filtrate after coagulating the latex after polymerization to remove the fluorinated copolymer and the filtrate remaining after washing the latex were filtered, through a disc filter, to obtain the resulting liquid, which was analyzed by an ion chromatography measurement device (manufactured by Dia Instruments Co. Ltd., a device having a pretreatment apparatus AQF-100 Model for automatic sample combustion device ion chromatograph and an ion chromatograph combined).

In a case where at least 3 mass% of fluoride ions to the charged amount of DVE are detected, as the amount of DVE used, a value obtained by subtracting the amount of DVE in the liquid calculated based on the above results of the ion chromatography measurement from the amount of DVE added to the reactor (the amount of DVE charged) was used.

On the other hand, in a case where at least 3 mass% of fluoride ions to the charged amount of DVE are not detected, it is assumed that all the DVE used for charging has been polymerized, and as the amount of DVE used, the amount of DVE charged was used.

Based on the amount of DVE units used, thus obtained, the content (mol%) of DVE units to all units of the fluorinated copolymer was calculated.

### [Storage modulus G' of fluorinated copolymer]

Using rubber processing analysis system (manufactured by Alpha Technologies, Inc. RPA2000), in accordance with ASTM D6204, a value measured under conditions of a temperature of 100°C, an amplitude of 0.5 degree, and a vibration frequency of 50 times/min., was adopted as the storage modulus G' of the fluorinated copolymer. The storage modulus G' of the fluorinated copolymer is an index for the flowability at the time of molding of a crosslinked rubber article.

### [Storage modulus G'_{0.1} and G'₁ of fluorinated copolymer]

Using rubber processing analysis system (manufactured by Alpha Technologies, Inc. RPA2000), in accordance with ASTM D4440, values measured under conditions of a temperature of 140°C and shear rates of 0.1 degree/second and 1 degree/second, respectively, were adopted as the storage modulus G'_{0.1} and G'₁ of the fluorinated copolymer.

### [Degree of crosslinking in fluorinated copolymer composition]

With respect to the fluorinated copolymer composition, the crosslinking properties of the fluorinated copolymer composition were measured by using a crosslinking property measuring instrument (manufactured by Alfa Technologies, Inc., product name "RPA2000") in accordance with ASTM D5289 under conditions of 177°C for 12 minutes at an amplitude of 3 degrees.

M_{H} to be measured represents the maximum value of torque, M_{L} represents the minimum value of torque, and M_{H}-M_{L} (M_{H} minus M_{L}) represents the degree of crosslinking (unit: dNm). The crosslinking properties are an index for the crosslinking reactivity of the fluorinated copolymer, and the larger the value of M_{H}-M_{L}, the better the crosslinking reactivity.

### [Specific gravities of fluorinated copolymer and crosslinked rubber article]

With respect to the fluorinated copolymer and the crosslinked rubber article, the specific gravities were measured by using a specific gravity meter (manufactured by Shinko Denshi Co., Ltd.) in accordance with JIS K6220-1: 2015.

### [Tensile strength, 100% modulus and tensile elongation of crosslinked rubber article]

Using a test specimen having a plate-shaped crosslinked rubber article (thickness: 1 mm) punched out by a No. 4 dumbbell, the tensile strength, 100% modulus and tensile elongation were measured in accordance with JIS K6251: 2010 (corresponding international standard ISO 37:2005).

Here, as the measuring device, a tensile testing machine with data processing means (Quick Reader TS-2530, manufactured by Ueshima Seisakusho Co., Ltd.) was used.

Each test was conducted by using three test specimens, and the arithmetic mean value of the measured values of the three test specimens was recorded.

### [Hardness]

Using a test specimen of the crosslinked rubber article, the hardness (Shore-A) was measured by using a type A durometer in accordance with JIS K6253: 2012.

Here, as the measuring device, an automatic hardness tester for rubber (Digitest Shore-A, manufactured by H. Bareiss) was used.

The test was conducted by using three test specimens, and the arithmetic mean value of the measured values of the three test specimens was recorded.

### [Compression set]

Using a test specimen of the crosslinked rubber article, the compression set (%) when the test specimen was held at 250°C for 70 hours was measured in accordance with JIS K6262. The smaller the value of the compression set, the better the recovery property of the crosslinked rubber article, i.e., the better the crosslinking.

The test was conducted by using three test specimens, and the arithmetic mean value of the measured values of the three test specimens was recorded.

### [Heat aging test]

The thickness of a test specimen of the crosslinked rubber article was measured by a thickness gauge, and then, the test specimen was heated at 300°C for 70 hours under an air atmosphere (heat aging).

After cooling the test specimen to room temperature after heat aging, the tensile strength, 100% modulus and tensile elongation after heat aging were measured by using the cooled test specimen under the same conditions as the above described test method.

The test was conducted by using three test specimens, and the arithmetic mean value of the measured values of the three test specimens was recorded.

The rate of change before and after the heat aging test (heat aging test change rate) was calculated in accordance with the following formula, based on the measured value of the test specimen not subjected to heat aging (normal test value) and the measured value of the test specimen after heat aging (test value after heat aging). The closer the rate of change to 0%, the better the heat resistance. Heat aging test change rate (%) = 100 × {(normal test value) - (test value after heat aging)} / (normal test value)

### [Mold release property test]

By introducing the fluorinated copolymer composition into a sheet-shaped mold, the fluorinated copolymer composition was crosslinked at 180°C for 20 minutes to obtain a crosslinked rubber article (100 mm in length × 60 mm in width × 1 mm in thickness). After the crosslinking reaction was completed, air was immediately sprayed to the interface between the crosslinked rubber article and the mold by using an air gun (product name: Cyclone Duster, manufactured by Chuo Kuki Co., Ltd.), and the mold release properties were evaluated in accordance with the following evaluation standards.

Here, since air is injected immediately after the completion of the crosslinking reaction, the temperature of the crosslinked article at the time of air injection is considered to be close to 180°C.

### <Conditions for air injection by air gun>

Pressure: 0.5 MPa
Air injection time: 3 seconds

### <Evaluation standards>

○: The crosslinked rubber article was detached from the mold.
×: The crosslinked rubber article did not detach from the mold.

### [Ex. 1]

### <Production of fluorinated copolymer 1>

A stainless steel pressure-resistant reactor with an internal volume of 20 L equipped with anchor blades was degassed, and then, 7.2 L of ultrapure water, 880 g of a 30 mass% solution of C₂F₅ OCF₂ CF₂ OCF₂ COONH₄ as an emulsifier, 7.3 g of 8CNVE, 17.7 g of C3DVE, and 15.9 g of a 5 mass% aqueous solution of disodium hydrogen phosphate 12 hydrate, were charged, and the gas phase was replaced with nitrogen. While stirring with the anchor blades at a speed of 375 rpm, 137 g of TFE and 635 g of PMVE were injected under pressure into the vessel, and then, the internal temperature was raised to 80°C. The reactor internal pressure was 0.90 MPa [gauge]. 40 mL of a 3 mass% aqueous solution of ammonium persulfate (APS) was added, to initiate polymerization. The addition ratio of the monomers injected under pressure before the initiation of polymerization (hereinafter referred to as "initially added monomers") as expressed by a molar ratio, was TFE:PMVE:8CNVE:C3DVE = 26.0:72.6:0.4:1.0.

After the initiation of polymerization, monomers were injected under pressure as follows as the polymerization progressed. Hereafter, injection of monomers under pressure after the initiation of polymerization will be referred to also as "post-adding" and monomers to be injected under pressure after the initiation of polymerization will be referred to also as "post-added monomers".

At the time when the reactor internal pressure dropped to 0.89 MPa [gauge], TFE was injected under pressure, and the reactor internal pressure was raised to 0.90 MPa [gauge]. This operation was repeated, and each time when 119.3 g of TFE was injected under pressure, 3.6 g of 8CNVE, 74 g of PMVE and 3.6 g of 8CNVE, were injected under pressure in this order.

At the time when the polymerization speed decreased, a 3 mass% aqueous solution of APS was optionally added. The total of the 3 mass% aqueous solution of APS added after the initiation of polymerization was 51 mL.

Upon completion of the cycle when the total added mass of TFE became to be 1,073.7 g, 119.3 g of TFE was injected under pressure. At the time when the total mass of post-added TFE reached 1,193 g, the addition of post-added monomers was stopped, and the reactor internal temperature was cooled to 10°C to stop the polymerization reaction and to obtain a latex containing a fluorinated copolymer. The polymerization time was 375 minutes. Further, the total added masses of the respective post-added monomers were 1,193 g of TFE, 666 g of PMVE and 64.8 g of 8CNVE, which can be converted into the molar ratio of TFE:PMVE:8CNVE = 74.1:24.9:1.0.

The latex was added to a 5 mass% aqueous solution of potassium aluminum sulfate to flocculate and separate the fluorinated copolymer. The fluorinated copolymer was filtered, washed with ultrapure water, and vacuum dried at 50°C, to obtain white fluorinated copolymer 1. The contents (molar ratio) of the respective units in the obtained fluorinated copolymer 1 were TFE units/PMVE units/8CNVE units/C3DVE units = 68.9/30.3/0.5/0.3.

Further, the filtrate after flocculation of the latex after polymerization and taking out of the fluorinated copolymer and the filtrate remaining after washing the latex, were filtered through a disc filter, and the obtained liquid was analyzed by an ion chromatography measurement device, whereby no fluoride ions were detected at a level of at least 3 mass% to the charged amount of C3DVE. Therefore, it was assumed that all the C3DVE used in charging was polymerized, and the content of C3DVE units to all units in the polymer was calculated based on the charged amount of C3DVE.

### <Production of fluorinated copolymer composition 1>

The fluorinated copolymer composition 1 was obtained by mixing the respective components in the ratio of 100 parts by mass of the fluorinated copolymer 1, 8 parts by mass of carbon black (manufactured by Tokai Carbon Co., Ltd., Seast 9), 3 parts by mass of tetraphenyltin (manufactured by Tokyo Chemical Industry Co., Ltd.) and 0.1 part by mass of 18-crown-6 (manufactured by FUJIFILM Wako Pure Chemical Corporation), followed by kneading with two rolls.

### <Production of crosslinked rubber article 1>

The fluorinated copolymer composition 1 was crosslinked and molded at 180°C for 20 minutes to obtain a crosslinked rubber sheet of 100 mm in length × 60 mm in width × 1 mm in thickness (primary crosslinking). Then, under a nitrogen atmosphere, the crosslinked rubber sheet was heated at 90°C for 3 hours, then raised to 305°C over 5 hours, and heated for another 13 hours while maintaining 305°C (secondary crosslinking).

The obtained crosslinked rubber sheet after secondary crosslinking was cooled to room temperature, and then punched into a No. 4 dumbbell shape as specified in JIS K6251, to obtain three test specimens of the crosslinked rubber article 1.

### [Ex. 2 to Ex. 7]

Fluorinated copolymers 2 to 7, fluorinated copolymer compositions 2 to 7 and test specimens of crosslinked rubber articles 2 to 7 were obtained in the same manner as in Ex. 1, except that the types of monomers used, the addition ratio of initially added monomers, the addition ratio of post-added monomers, the order of addition of post-added monomers, the number of repetitions of the order of addition of post-added monomers, the amount of additional addition of polymerization initiator, and the polymerization conditions were changed as shown in Tables 1-1 and 1-2. Here, it should be noted that "C6DV" used in Ex. 5 is CH₂ =CH(CF₂ )₆ CH=CH₂.

### [Ex. 8]

### <Production of fluorinated copolymer 8>

After degassing a stainless steel pressure-resistant reactor with an internal volume of 20 L equipped with anchor blades, 7.2 L of ultrapure water, 880 g of a 30 mass% solution of C₂F₅OCF₂CF₂OCF₂COONH₄ as an emulsifier, 17.5 g of C3DVE, and 15.9 g of a 5 mass% aqueous solution of disodium hydrogen phosphate 12 hydrate, were charged, and the gas phase was replaced with nitrogen. While stirring at a speed of 375 rpm by using the anchor blades, 140 g of TFE and 631 g of PMVE were injected under pressure into the vessel, and then, the internal temperature was raised to 80°C. The reactor internal pressure was 0.90 MPa [gauge]. 40 mL of a 3 mass% aqueous solution of ammonium persulfate (APS) was added, to initiate polymerization. The added ratio of monomers to be injected under pressure before the initiation of polymerization (hereinafter referred to also as "initially added monomers") as expressed by a molar ratio, was TFE:PMVE:C3DVE = 26.7:72.4:1.0.

At the time when the reactor internal pressure dropped to 0.89 MPa [gauge] along with the progress of the polymerization, TFE was injected under pressure, and the reactor internal pressure was increased to 0.90 MPa [gauge]. This operation was repeated, and each time when 110 g of TFE was injected under pressure, 90 g of PMVE was also injected under pressure. Further, at the time when 30 g of TFE was injected under pressure, 7.0 g of 1,4-diiodoperfluorobutane was injected under pressure into the reactor from an ampoule tube, together with 50 mL of ultrapure water. When the polymerization rate started to decrease, a 3 mass% aqueous solution of APS was optionally added. The total amount of the 3 mass% aqueous solution of APS added after the initiation of polymerization was 45 mL.

Upon completion of the cycle when the total added mass of TFE became to be 990 g, 110 g of TFE was injected under pressure. At the time when the total mass of post-added TFE reached 1,100 g, the addition of the post-added monomers was stopped, and the reactor internal temperature was cooled to 10°C to stop the polymerization reaction and to obtain a latex containing fluorinated copolymer 8. The polymerization time was 396 minutes. Further, the total added masses of the respective post-added monomers were 1,100 g of TFE and 810 g of PMVE, which can be converted to a molar ratio of TFE:PMVE = 69.3:30.7.

The molar ratio of the respective units in the fluorinated copolymer 8 obtained by flocculating the latex after polymerization with a 5 mass% aqueous solution of potassium aluminum sulfate in accordance with Example 1, was TFE units:PMVE units:C3DVE units = 68.5:31.2:0.3. Further, the content of iodine atoms in the fluorinated copolymer 8 was 0.20 mass%, as calculated by an apparatus combining an automatic sample combustion device as a pretreatment device for ion chromatography (manufactured by Mitsubishi Chemical Analytic Corporation, AQF-100 Model) and an ion chromatograph.

Further, the filtrate after flocculation of the latex after polymerization and taking out of the fluorinated copolymer and the filtrate remaining after washing the latex, were filtered through a disc filter, and the obtained liquid was analyzed by an ion chromatography measurement device, whereby no fluoride ions were detected at a level of at least 3 mass% to the charged amount of C3DVE. Therefore, it was assumed that all the C3DVE used in charging was polymerized, and the content of C3DVE units to all units in the polymer was calculated based on the charged amount of C3DVE.

### <Production of fluorinated copolymer composition 8>

The fluorinated copolymer composition 8 was obtained by mixing the respective components in the ratio of 100 parts by mass of the fluorinated copolymer 8, 15 parts by mass of carbon black (Thermax N990 manufactured by cancarb, Inc.), 3 parts by mass of triallyl isocyanurate (manufactured by Mitsubishi Chemical Corp., TAIC WH-60), 1 part by mass of 2,5-dimethyl-2,5-di(tert-butylperoxy)hexane (manufactured by NOF Corporation, Perhexa 25B) and 1 part by mass of calcium stearate (manufactured by Kanto Chemical Co., Inc.), followed by kneading with two rolls.

### <Production of crosslinked rubber article 8>

With respect to the fluorinated copolymer composition 8, heat pressing (primary crosslinking) was conducted at 150°C for 20 minutes, followed by secondary crosslinking in an oven at 250°C for 4 hours to obtain a crosslinked rubber sheet with a thickness of 1 mm. The obtained crosslinked rubber sheet after secondary crosslinking was cooled to room temperature, and then punched into a No. 4 dumbbell shape as specified in JIS K6251, to obtain three test specimens of a crosslinked rubber article 8.

The evaluation results in the respective Ex. are shown in Table 1-1 and Table 1-2.

**[Table 1-1]**

| Table 1-1 | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Types of monomers used for producing fluorinated copolymer | | | TFE | TFE | TFE | TFE | TFE | TFE | TFE | TFE |
| | | | PMVE | PMVE | PMVE | PMVE | PMVE | PMVE | PMVE | PMVE |
| | | | 8CNVE | 8CNVE | 8CNVE | MV5CN | 8CNVE | 8CNVE | 8CNVE | - |
| | | | C3DVE | C3DVE | C3DVE | C3DVE | C6DV | C3DVE | - | C3DVE |
| Initially added monomers | TFE | mol% | 26.0 | 26.0 | 26.0 | 26.0 | 26.0 | 25.5 | 26.3 | 26.7 |
| | PMVE | mol% | 72.6 | 72.6 | 72.6 | 72.6 | 72.6 | 71.1 | 73.4 | 72.4 |
| | 8CNVE or MV5CN | mol% | 0.4 | 0.4 | 0.4 | 0.4 | 0.4 | 2.5 | 0.4 | 0 |
| | C3DVE or C6DV | mol% | 1.0 | 1.0 | 1.0 | 1.0 | 1.0 | 1.0 | 0 | 1.0 |
| | TFE | g | 137 | 137 | 137 | 137 | 137 | 137 | 137 | 140 |
| | PMVE | g | 635 | 635 | 635 | 635 | 635 | 635 | 635 | 631 |
| | 8CNVE or MV5CN | g | 7.3 | 7.3 | 7.3 | 7.1 | 7.3 | 51.4 | 7.3 | 0.0 |
| | C3DVE or C6DV | g | 17.7 | 17.7 | 17.7 | 17.7 | 10.6 | 17.7 | 0.0 | 17.5 |
| | TFE | mol% | 74.1 | 74.0 | 74.0 | 74.0 | 74.0 | 74.0 | 74.0 | 69.3 |
| | PMVE | mol% | 24.9 | 25.0 | 25.0 | 24.9 | 25.0 | 25.0 | 25.0 | 30.7 |
| | 8CNVE or MV5CN | mol% | 1.0 | 1.1 | 1.1 | 1.1 | 1.0 | 1.1 | 1.1 | 0 |
| | C3DVE or C6DV | mol% | 0 | 0 | 0 | 0 | 0 | 0 | 0 | 0 |
| | TFE | g | 1193 | 1193 | 1193 | 1193 | 1193 | 1193 | 1193 | 1100 |
| | PMVE | g | 666 | 668 | 668 | 668 | 668 | 668 | 668 | 810 |
| Post-added monomers | 8CNVE or MV5CN | g | 54.8 | 66.7 | 66.7 | 65.9 | 65.7 | 66.7 | 66.2 | 0 |
| | C3DVE or C6DV | g | 0 | 0 | 0 | 0 | 0 | 0 | 0 | 0 |
| | Order of addition | | TFE→ 8CNVE →PMVE 8CNVE | TFE→ PMVE →8CNVE | TFE→ PMVE →8CNVE | TFE→ PMVE →MV5CN | TFE→ PMVE →8CNVE | TFE→ 8CNVE PMVE →8CNVE | TFE→ 8CNVE PMVE →8CNVE | TFE→ PMVE |
| | Number of repetitions of the order of addition | times | 9 | 9 | 19 | 9 | 19 | 9 | 9 | 9 |
| Polymerization initiator | Additionally added amount of APS aqueous solution | mL | 51 | 45 | 50 | 45 | 50 | 50 | 35 | 45 |
| | Added amount of APS | g | 2.8 | 2.6 | 2.8 | 2.6 | 2.8 | 2.8 | 2.3 | 2.6 |
| Polymerization results | Polymerization time | min | 375 | 387 | 401 | 390 | 380 | 465 | 375 | 396 |
| | Solid content in latex | mass% | 21.0 | 21.18 | 21.5 | 21.2 | 20.9 | 21.3 | 20.05 | 20.54 |

**[Table 1-2]**

| Table 1-2 | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Contents of the respective units in fluorinated copolymer (molar ratio) | TFE units | mol% | 68.9 | 69.0 | 68.7 | 68.6 | 68.8 | 68.7 | 68.9 | 68.5 |
| | PMVE units | mol% | 30.3 | 30.2 | 30.5 | 30.6 | 30.5 | 31.0 | 30.2 | 31.2 |
| | 8CNVE or MV5CN units | mol% | 0.5 | 0.5 | 0.5 | 0.5 | 0.4 | 1.0 | 0.5 | 0 |
| | C3DVE or C6DV units | mol% | 0.3 | 0.3 | 0.3 | 0.3 | 0.3 | 0.3 | 0 | 0.3 |
| | DVE units/CN units | - | 0.60 | 0.59 | 0.56 | 0.59 | 0.75 | 0.30 | 0.00 | - |
| | G' | kPa | 456 | 479 | 482 | 490 | 482 | 482 | 437 | 462 |
| | G'_{0.1} | kPa | 535 | 542 | 547 | - | - | 328 | 477 | - |
| | G'₁ | kPa | 746 | 746 | 744 | - | - | 531 | 691 | - |
| | Specific gravity | g/cm³ | 2.033 | 2.043 | 2.037 | 2.043 | 2.036 | 2.029 | 2.035 | 2.038 |
| | M_{H} | dNm | 36.0 | 37.7 | 39.1 | 42.7 | 42.0 | 52.7 | 37.0 | 125.0 |
| | M_{L} | dNm | 22.1 | 21.8 | 21.9 | 19.2 | 21.9 | 14.0 | 17.1 | 14.5 |
| Physical properties | M_{H}-M_{L} | dNm | 13.9 | 15.9 | 17.2 | 23.5 | 20.1 | 38.6 | 19.9 | 110.5 |
| | Tensile strength | MPa | 18.5 | 19.5 | 16.6 | 15.2 | 17.2 | 17.8 | 24.7 | 21.5 |
| | Tensile elongation | % | 159 | 157 | 143 | 196 | 155 | 180 | 198 | 177 |
| | 100% modulus | MPa | 7.27 | 8.19 | 8.01 | 4.73 | 8.01 | 5.97 | 6.99 | 8.80 |
| | Hardness | shoreA | 77 | 79 | 79 | 71 | 77 | 73 | 76 | 73 |
| | Compression set | % | 63 | 28.8 | 28.7 | 31.0 | 26.2 | 39.8 | 108.1 | 52.0 |
| Heat aging test | Tensile strength | % | -43 | -4.8 | -2.53 | -4.1 | -3.2 | -26.2 | - | - |
| | Tensile elongation | % | 81 | 19.1 | 34.2 | 20.1 | 29.1 | 28.8 | - | - |
| | 100% modulus | % | 1 | 0 | 0 | 1 | 1 | -1 | - | - |
| Mold release property test | | | ○ | ○ | ○ | ○ | ○ | ○ | × | × |

As shown in Table 1-1 and Table 1-2, it has been confirmed that it is possible to obtain a crosslinked rubber article excellent in mold release properties, when a fluorinated copolymer having TFE units, PAVE units, DVE units and R_{CN} units is used (Ex. 1 to Ex. 4 and Ex. 6). Further, it has been confirmed that it is possible to make the compression set of a crosslinked rubber article smaller, when a fluorinated copolymer having a storage modulus G' of at least 470 kPa is used (Ex. 1 to Ex. 4 and Ex. 6).

Whereas, it has been confirmed that the mold release properties of the crosslinked rubber article are insufficient when a fluorinated copolymer not having DVE units or R_{CN} units is used (Ex. 7 and Ex. 8). Further, with respect to the crosslinked rubber obtained by using the fluorinated copolymer not having DVE units or R_{CN} units, the test specimen underwent deformation, when it was heated to 300°C for the heat aging test, and thus it was not possible to measure the tensile strength, 100% modulus, and tensile elongation.

## Claims

1. A fluorinated copolymer having units based on tetrafluoroethylene, units based on a perfluoro(alkyl vinyl ether), units based on a monomer having a fluorine atom and at least two polymerizable unsaturated bonds, and units based on a monomer having a nitrile group and a fluorine atom,
wherein the molar ratio of the content of the units based on the monomer having a fluorine atom and at least two polymerizable unsaturated bonds to the content of the units based on the monomer having a nitrile group and a fluorine atom, is from 0.03 to 2,
wherein the monomer having a fluorine atom and at least two polymerizable unsaturated bonds is a monomer represented by the following formula (2):
(CR²¹R²²=CR²³)ₐ₂R²⁴ (2)
in the formula (2), R²¹, R²² and R²³ each independently represent a hydrogen atom, a fluorine atom, a methyl group or a trifluoromethyl group, a2 represents an integer of from 2 to 6, R²⁴ represents an a2 valent C₁₋₁₀ perfluorohydrocarbon group having etheric oxygen atoms at the terminals of the perfluorohydrocarbon group, wherein the number of etheric oxygen atoms in R²⁴ is 2,
and the plurality of R²¹, the plurality of R²² and the plurality of R²³ may, respectively, be the same or different from one another.

2. The fluorinated copolymer according to Claim 1, of which the storage modulus G' as measured in accordance with the measurement method set out in the description is at least 470 kPa.

3. The fluorinated copolymer according to any one of Claims 1 or 2, wherein the perfluoro(alkyl vinyl ether) is a monomer represented by the following formula (1):
CF₂=CF-O-R^{f1} (1)
in the formula (1), R^{f1} represents a C₁₋₁₀ perfluoroalkyl group.

4. The fluorinated copolymer according to any one of Claims 1 to 3, wherein the monomer represented by the formula (2) is a monomer represented by the following formula (3):
(CF₂=CF)₂R³¹ (3)
in the formula (3), R³¹ is a divalent C₁₋₁₀ perfluorohydrocarbon group having etheric oxygen atoms at the terminals of the perfluorohydrocarbon group.

5. The fluorinated copolymer according to any one of Claims 1 to 4, wherein the monomer having a nitrile group and a fluorine atom is a monomer represented by the following formula (5):
CR⁵¹R⁵²=CR⁵³-R⁵⁴-CN (5)
in the formula (5), R⁵¹, R⁵² and R⁵³ each independently represent a hydrogen atom, a fluorine atom or a methyl group, and R⁵⁴ is a divalent C₁₋₁₀ perfluorohydrocarbon group or a group having an etheric oxygen atom at the terminal or between carbon-carbon atoms of the perfluorohydrocarbon group.

6. The fluorinated copolymer according to any one of Claims 1 to 5, wherein to all units of the fluorinated copolymer, the content of units based on tetrafluoroethylene is from 59 to 80 mol%, the content of units based on a perfluoro(alkyl vinyl ether) is from 19 to 40 mol%, the content of units based on a monomer having a fluorine atom and at least two polymerizable unsaturated bonds is from 0.01 to 1.0 mol%, and the content of units based on a monomer having a nitrile group and a fluorine atom is from 0.05 to 5 mol%.

7. The fluorinated copolymer according to any one of Claims 1 to 6, wherein the fluorinated copolymer has an iodine atom.

8. A fluorinated copolymer composition comprising the fluorinated copolymer as defined in any one of Claims 1 to 7 and at least one of a crosslinking agent and a catalyst, wherein the catalyst is an organotin compound.

9. The fluorinated copolymer composition according to Claim 8, which does not substantially contain a mold release agent, wherein the content of the mold release agent is at most 0.1 part by mass to 100 parts by mass of the fluorinated copolymer.

10. A crosslinked rubber article having the fluorinated copolymer in the fluorinated copolymer composition as defined in Claim 8 or 9 crosslinked.

## Patentansprüche

1. Fluoriertes Copolymer, das Einheiten basierend auf Tetrafluorethylen, Einheiten basierend auf einem Perfluor(alkylvinylether), Einheiten basierend auf einem Monomer mit einem Fluoratom und mindestens zwei polymerisierbaren ungesättigten Bindungen und Einheiten basierend auf einem Monomer mit einer Nitrilgruppe und einem Fluoratom aufweist,
wobei das molare Verhältnis des Gehalts der Einheiten basierend auf dem Monomer mit einem Fluoratom und mindestens zwei polymerisierbaren ungesättigten Bindungen zu dem Gehalt der Einheiten basierend auf dem Monomer mit einer Nitrilgruppe und einem Fluoratom von 0,03 bis 2 beträgt,
wobei das Monomer mit einem Fluoratom und mindestens zwei polymerisierbaren ungesättigten Bindungen ein Monomer ist, das durch die folgende Formel (2) dargestellt ist:
(CR²¹R²²=CR²³)ₐ₂R²⁴ (2)
wobei in der Formel (2) R²¹, R²² und R²³ jeweils unabhängig ein Wasserstoffatom, ein Fluoratom, eine Methylgruppe oder eine Trifluormethylgruppe darstellen, a2 eine ganze Zahl von 2 bis 6 darstellt, R²⁴ eine a2-wertige C₁₋₁₀-Perfluorkohlenwasserstoffgruppe mit etherischen Sauerstoffatomen an den Enden der Perfluorkohlenwasserstoffgruppe darstellt, wobei die Anzahl der etherischen Sauerstoffatome in R²⁴ 2 beträgt,
und die Mehrzahl von R²¹, die Mehrzahl von R²² und die Mehrzahl von R²³ jeweils gleich oder voneinander verschieden sein können.

2. Fluoriertes Copolymer nach Anspruch 1, dessen Speichermodul G', gemessen in Übereinstimmung mit dem in der Beschreibung angegebenen Messverfahren, mindestens 470 kPa beträgt.

3. Fluoriertes Copolymer nach einem der Ansprüche 1 oder 2, wobei der Perfluor(alkylvinylether) ein Monomer ist, das durch die folgende Formel (1) dargestellt ist:
CF₂=CF-O-R^{f1} (1)
wobei in der Formel (1) R^{f1} eine C₁₋₁₀-Perfluoralkylgruppe darstellt.

4. Fluoriertes Copolymer nach einem der Ansprüche 1 bis 3, wobei das durch die Formel (2) dargestellte Monomer ein Monomer ist, das durch die folgende Formel (3) dargestellt ist:
(CF₂=CF)₂R³¹ (3)
wobei in der Formel (3) R³¹ eine zweiwertige C₁₋₁₀-Perfluorkohlenwasserstoffgruppe mit etherischen Sauerstoffatomen an den Enden der Perfluorkohlenwasserstoffgruppe ist.

5. Fluoriertes Copolymer nach einem der Ansprüche 1 bis 4, wobei das Monomer mit einer Nitrilgruppe und einem Fluoratom ein Monomer ist, das durch die folgende Formel (5) dargestellt ist:
CR⁵¹R⁵²=CR⁵³-R⁵⁴-CN (5)
wobei in der Formel (5) R⁵¹, R⁵² und R⁵³ jeweils unabhängig ein Wasserstoffatom, ein Fluoratom oder eine Methylgruppe darstellen, und R⁵⁴ eine zweiwertige C₁₋₁₀-Perfluorkohlenwasserstoffgruppe oder eine Gruppe mit einem etherischen Sauerstoffatom am Ende oder zwischen Kohlenstoff-Kohlenstoffatomen der Perfluorkohlenwasserstoffgruppe ist.

6. Fluoriertes Copolymer nach einem der Ansprüche 1 bis 5, wobei zu allen Einheiten des fluorierten Copolymers der Gehalt der Einheiten basierend auf Tetrafluorethylen von 59 bis 80 Mol-% beträgt, der Gehalt der Einheiten basierend auf einem Perfluor(alkylvinylether) von 19 bis 40 Mol-% beträgt, der Gehalt der Einheiten basierend auf einem Monomer mit einem Fluoratom und mindestens zwei polymerisierbaren ungesättigten Bindungen von 0,01 bis 1,0 Mol-% beträgt und der Gehalt der Einheiten basierend auf einem Monomer mit einer Nitrilgruppe und einem Fluoratom von 0,05 bis 5 Mol-% beträgt.

7. Fluoriertes Copolymer nach einem der Ansprüche 1 bis 6, wobei das fluorierte Copolymer ein lodatom aufweist.

8. Fluorierte Copolymerzusammensetzung, umfassend das fluorierte Copolymer, wie in einem der Ansprüche 1 bis 7 gekennzeichnet, und mindestens eines von einem Vernetzungsmittel und einem Katalysator, wobei der Katalysator eine Organozinnverbindung ist.

9. Fluorierte Copolymerzusammensetzung nach Anspruch 8, welche im Wesentlichen kein Formtrennmittel enthält, wobei der Gehalt des Formtrennmittels höchstens 0,1 Massenteile bezogen auf 100 Massenteile des fluorierten Copolymers beträgt.

10. Vernetzter Kautschukartikel, der das fluorierte Copolymer in der fluorierten Copolymerzusammensetzung, wie in Anspruch 8 oder 9 gekennzeichnet, in vernetzter Form aufweist.

## Revendications

1. Copolymère fluoré ayant des unités à base de tétrafluoroéthylène, des unités à base d'un perfluoro(alkyl vinyl éther), des unités à base d'un monomère ayant un atome de fluor et au moins deux liaisons insaturées polymérisables, et des unités à base d'un monomère ayant un groupe nitrile et un atome de fluor,
dans lequel le rapport molaire entre la teneur des unités à base de monomère ayant un atome de fluor et au moins deux liaisons insaturées polymérisables et la teneur des unités à base de monomère ayant un groupe nitrile et un atome de fluor est compris entre 0,03 et 2,
dans lequel le monomère ayant un atome de fluor et au moins deux liaisons insaturées polymérisables est un monomère représenté par la formule suivante (2) :
(CR²¹R²²=CR²³)ₐ₂R²⁴ (2)
dans la formule (2), R²¹, R²² et R²³ représentent chacun indépendamment un atome d'hydrogène, un atome de fluor, un groupe méthyle ou un groupe trifluorométhyle, a2 représente un nombre entier compris entre 2 et 6, R²⁴ représente un groupe perfluorohydrocarbone en C₁₋₁₀ de valence a2 ayant des atomes d'oxygène éthérique au niveau des extrémités du groupe perfluorohydrocarbone, dans lequel le nombre d'atomes d'oxygène éthérique dans R²⁴ est de 2,
et la pluralité de R²¹, la pluralité de R²² et la pluralité de R²³ peuvent, respectivement, être identiques ou différentes les unes des autres.

2. Copolymère fluoré selon la revendication 1, dont le module de stockage G', tel que mesuré selon le procédé de mesure exposé dans la description, est d'au moins 470 kPa.

3. Copolymère fluoré selon l'une quelconque des revendications 1 ou 2, dans lequel le perfluoro(alkyl vinyl éther) est un monomère représenté par la formule (1) suivante :
CF₂=CF-O-R^{f1} (1)
dans la formule (1), R^{f1} représente un groupe alkyle perfluoré en C₁₋₁₀.

4. Copolymère fluoré selon l'une quelconque des revendications 1 à 3, dans lequel le monomère représenté par la formule (2) est un monomère représenté par la formule (3) suivante :
(CF₂=CF)₂R³¹ (3)
dans la formule (3), R³¹ est un groupe perfluorohydrocarboné en C₁₋₁₀ divalent ayant des atomes d'oxygène éthérique au niveau des extrémités du groupe perfluorohydrocarbone.

5. Copolymère fluoré selon l'une quelconque des revendications 1 à 4, dans lequel le monomère ayant un groupe nitrile et un atome de fluor est un monomère représenté par la formule (5) suivante :
CR⁵¹R⁵²=CR⁵³-R⁵⁴-CN (5)
dans la formule (5), R⁵¹, R⁵² et R⁵³ représentent chacun indépendamment un atome d'hydrogène, un atome de fluor ou un groupe méthyle, et R⁵⁴ est un groupe perfluorohydrocarbone en C₁₋₁₀ divalent ou un groupe ayant un atome d'oxygène éthérique au niveau de l'extrémité ou entre les atomes de carbonecarbone du groupe perfluorohydrocarbone.

6. Copolymère fluoré selon l'une quelconque des revendications 1 à 5, dans lequel, par rapport à l'ensemble des unités du copolymère fluoré, la teneur d'unités à base de tétrafluoroéthylène est de 59 à 80 % en moles, la teneur d'unités à base d'un perfluoro(alkyl vinyl éther) est de 19 à 40 % en moles, la teneur d'unités à base d'un monomère ayant un atome de fluor et au moins deux liaisons insaturées polymérisables est de 0,01 à 1,0 % en moles, et la teneur d'unités à base d'un monomère ayant un groupe nitrile et un atome de fluor est de 0,05 à 5 % en moles.

7. Copolymère fluoré selon l'une quelconque des revendications 1 à 6, dans lequel le copolymère fluoré a un atome d'iode.

8. Composition de copolymère fluoré comprenant le copolymère fluoré tel que défini dans l'une quelconque des revendications 1 à 7 et au moins l'un parmi un agent de réticulation et un catalyseur, dans laquelle le catalyseur est un composé d'organoétain.

9. Composition de copolymère fluoré selon la revendication 8, qui ne contient pas essentiellement d'agent de démoulage, dans laquelle la teneur de l'agent de démoulage est d'au plus 0,1 partie en masse pour 100 parties en masse de copolymère fluoré.

10. Article en caoutchouc réticulé ayant le copolymère fluoré de la composition de copolymères fluorés telle que définie dans la revendication 8 ou 9 réticulé.
